# FASCICULE DE BREVET EUROPEEN

(11) **EP 3 001 113 B1**
(45) Date de publication et mention de la délivrance du brevet: **18.07.2018**
(21) Numéro de dépôt: 15186906.2
(22) Date de dépôt: 25.09.2015
(51) Int. Cl.: F28F 9/26, F28G 9/00, F28F 27/02, F24D 17/00, F28D 21/00, E03C 1/00, F24D 19/00, F24D 19/10

(54) **ENSEMBLE D'ÉCHANGE THERMIQUE POUR INSTALLATIONS COLLECTIVES**
WÄRMETAUSCHEREINHEIT FÜR GEMEINSCHAFTSANLAGEN
HEAT EXCHANGE ASSEMBLY FOR COLLECTIVE FACILITIES

(30) Priorité: 29.09.2014 FR 1459208
(43) Date de publication de la demande: 30.03.2016
(73) Titulaire: Energy Harvesting Tech, 31520 Ramonville St. Agne (FR)
(72) Inventeur: DUROU, Hugo, 31000 Toulouse (FR); RICOU, Thomas, 31000 Toulouse (FR); CALMETTES, Bastien, 35000 RENNES (FR)
(74) Mandataire: Junca, Eric

(56) Documents cités:
- EP-A1- 2 703 568
- WO-A1-2008/068500
- US-A1- 2007 170 270

## Description

### Domaine de l'invention

La présente invention concerne un ensemble d'échange thermique pour la récupération de l'énergie thermique d'un écoulement fluide. L'ensemble d'échange thermique est plus particulièrement, mais non exclusivement, adapté à la récupération de chaleur d'un écoulement d'eaux grises issues d'installations sanitaires collectives.

### Etat de la technique

Par « eaux grises » on entend dans le cadre de la présente invention les eaux qui proviennent des usages domestiques tels que les douches, les lavabos ou les baignoires de salles de bain, les éviers de cuisine, les lave-vaisselles et les lave-linges. Les eaux grises sont généralement chargées de matières polluantes, par exemple des résidus alimentaires, des graisses, des huiles, des produits de nettoyage, des matières fibreuses telles que des cheveux ou des fibres textiles, etc.

Un dispositif de récupération de la chaleur des eaux grises collectées par un receveur est connu de l'art antérieur, notamment de la demande de brevet FR 2 987 670 du demandeur, et illustré figures 1 et 2. Ce dispositif de récupération de l'art antérieur récupère la chaleur des eaux grises collectées par un receveur, par exemple le receveur d'une douche, au moyen d'un échangeur thermique à plaques 130. Les eaux grises collectées par le receveur traversent l'échangeur thermique à plaques dans lequel elles pénètrent par une première entrée 131 et en ressortent par une première sortie 132. En parallèle, de l'eau froide sanitaire, destinée à alimenter un récepteur, par exemple la douche, traverse l'échangeur thermique à plaques dans lequel elle pénètre par une deuxième entrée (non représentée) et en ressortent par une deuxième sortie 134. En traversant l'échangeur thermique à plaques 130, l'eau froide sanitaire est réchauffée par le flux des eaux grises.

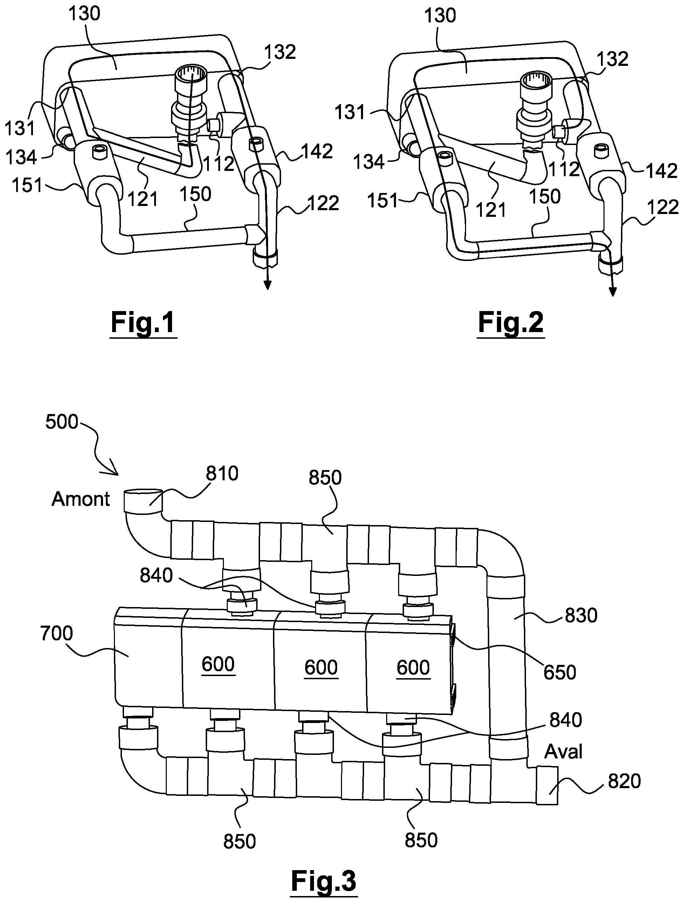

Ce dispositif de récupération comprend aussi des aménagements hydrauliques destinés à déloger un bouchon causant l'obstruction de l'échangeur thermique à plaques. Dans l'exemple des figures 1 et 2, le dispositif de récupération comporte des vannes, par exemple des vannes à manchon, à pilotage hydraulique. Une première vanne 151 est placée entre la première entrée 131 de l'échangeur thermique à plaques 130 et une branche 150, en dérivation de cette première entrée 131 vers l'égout.

Une deuxième vanne 142 est placée sur une canalisation 122 mettant la première sortie 132 de l'échangeur 130 en communication avec l'égout.

Une troisième vanne (non représentée) est placée sur une canalisation 112 montée en dérivation entre la deuxième entrée et la première sortie 132 de l'échangeur thermique à plaques.

La figure 1 illustre le fonctionnement nominal du dispositif de récupération. Lors de ce fonctionnement nominal, la première vanne 151 et la troisième vanne sont fermées et la deuxième vanne 142 est passante. Les eaux grises collectées au receveur traversent l'échangeur thermique à plaques 130 avant de rejoindre l'égout et réchauffent au passage le flux d'eau froide sanitaire dirigé vers le récepteur.

La figure 2 illustre le mode nettoyage lorsque l'échangeur thermique à plaques est bouché. Lors du nettoyage, la première vanne 151 et la troisième vanne sont passantes et la deuxième vanne 142 est fermée. De l'eau froide sanitaire, à la pression du réseau, est envoyée dans l'échangeur thermique à plaques 130 à la première sortie 132 de celui-ci, provoquant un flux inverse à celui de l'écoulement normal des eaux grises dans ledit échangeur thermique à plaques. Ainsi, le flux d'eau froide sanitaire traversant l'échangeur thermique à plaques 130 de sa première sortie 132 vers sa première entrée 131 se déverse à l'égout par la branche 150.

Cette circulation en sens inverse et sous la charge de la pression du réseau d'eau froide sanitaire, permet de déloger un éventuel bouchon obstruant la première entrée 131 de l'échangeur thermique à plaques 130 et d'envoyer ledit bouchon à l'égout. Ainsi, le flux d'eau froide sanitaire traversant l'échangeur thermique à plaques 130 en sens inverse de l'écoulement nominal est un véritable flux de nettoyage.

Un tel dispositif de récupération offre des performances thermiques élevées. Toutefois, ce dispositif de récupération installé dans les installations sanitaires domestiques ou collectives est dimensionné pour un débit d'eaux grises donné à traiter, c'est-à-dire un nombre de logements déterminé.

Lorsque ce paramètre évolue à la hausse, le dispositif de récupération n'est pas en mesure de recevoir ce surplus de débit d'eaux grises, ce qui peut nuire à l'évacuation des eaux grises du receveur.

Le document WO 2008/068500 décrit un ensemble comportant une canalisation de distribution des eaux grises, une canalisation de collecte et un trop plein reliant les deux canalisations permettant évacuer le surplus de débit d'eaux grises.

### Exposé de l'invention

La présente invention a pour but de remédier aux inconvénients de l'art antérieur.

L'invention concerne ainsi un ensemble d'échange thermique pour la récupération de l'énergie thermique d'un écoulement fluide, notamment d'eaux grises issues d'au moins un receveur. Cet ensemble d'échange thermique, par la suite simplement dénommé ensemble, comporte :
- une canalisation de distribution des eaux grises,
- une canalisation de collecte,
- une pluralité de modules d'échange thermique,
- un trop plein reliant la canalisation de distribution des eaux grises et la canalisation de collecte, en aval des modules d'échange thermique.

Dans l'ensemble de la description, les termes « amont » et « aval » sont définis selon le sens d'écoulement des eaux grises.

Chaque module d'échange thermique comporte :
- une première entrée en connexion hydraulique avec la canalisation de distribution d'eaux grises,
- une première sortie en connexion hydraulique avec la canalisation de collecte,
- une deuxième entrée et une deuxième sortie en connexion hydraulique avec une canalisation d'eau froide sanitaire.

Chaque module d'échange thermique comporte en outre un dispositif de récupération d'énergie thermique de l'écoulement des eaux grises. Ce dispositif de récupération comporte un échangeur thermique à plaques et un réseau de canalisations hydrauliques. Ce réseau de canalisations hydrauliques permet à l'échangeur thermique à plaques d'être traversé par deux flux fluides, le flux des eaux grises et le flux d'eau froide sanitaire à la pression du réseau.

Les eaux grises collectées par l'au moins un receveur traversent l'échangeur thermique à plaques dans lequel elles pénètrent par une première entrée et en ressortent par une première sortie. En parallèle, de l'eau froide sanitaire à la pression du réseau, destinée à alimenter au moins un récepteur, par exemple une douche, traverse l'échangeur thermique à plaques dans lequel elle pénètre par une deuxième entrée et en ressortent par une deuxième sortie. En traversant l'échangeur thermique à plaques, l'eau froide sanitaire est réchauffée par le flux des eaux grises.

La première entrée de l'échangeur thermique à plaques est en connexion hydraulique avec la première entrée du module d'échange thermique le contenant.

La première sortie de l'échangeur thermique à plaques est en connexion hydraulique avec la première sortie du module d'échange thermique le contenant.

Les deuxièmes entrée et sortie de l'échangeur thermique à plaques sont en connexion hydraulique avec les deuxièmes entrée et sortie du module d'échange thermique le contenant.

L'ensemble objet de l'invention se caractérise en ce que les modules d'échange thermique sont en outre en communication hydraulique les uns avec les autres et sont montés :
- en dérivation à la canalisation de distribution des eaux grises, au niveau de la première entrée,
- en dérivation à la canalisation de collecte, au niveau de la première sortie,
- en série à la canalisation d'eau froide sanitaire.

En d'autres termes, l'ensemble est formé d'une pluralité de modules d'échange thermique assemblés hydrauliquement les uns aux autres, d'une part en dérivation pour la circulation des eaux grises et d'autre part en série pour la circulation d'eau froide sanitaire.

Le montage en dérivation des modules d'échange thermique est réalisé de sorte à permettre un écoulement en cascade du flux des eaux grises dans les différents modules d'échange thermique. Le flux des eaux grises est redirigé naturellement au fur et à mesure de l'augmentation du débit d'eaux grises et/ou de l'encrassement des premiers échangeurs, ceux en amont, vers les derniers échangeurs, ceux en aval, selon le sens d'écoulement des eaux grises traversant la canalisation de distribution des eaux grises, puis dans le trop plein.

Ce montage, également dit en cascade, permet avantageusement d'optimiser le débit d'eaux grises pour qu'il atteigne dans chaque échangeur un nombre de Reynolds > 130, ce qui limite le dépôt de matières polluantes sur des parois des plaques de l'échangeur thermique à plaques.

Ainsi, dans ce montage, un faible débit du flux des eaux grises est intégralement dirigé vers l'échangeur thermique à plaques du module d'échange thermique le plus en amont, au lieu d'être partagé entre les échangeurs thermiques à plaques des différents modules d'échange thermique de l'ensemble.

Un tel montage permet également de concentrer l'encrassement sur les premiers échangeurs thermiques à plaques, ceux les plus en amont, au niveau de leurs entrées, et de laisser les derniers échangeurs thermiques à plaques, ceux les plus en aval, propres et par conséquent efficaces.

Pour le montage en série de la circulation d'eau froide sanitaire, l'eau froide sanitaire pénètre par exemple dans le module d'échange thermique le plus en aval, et traverse successivement tous les échangeurs thermiques à plaques des différents modules d'échange thermique de l'ensemble.

Un tel ensemble est avantageusement adapté à des installations sanitaires collectives.

Le nombre de modules d'échange thermique est défini en fonction du débit d'eaux grises à traiter. Un nombre de modules d'échange thermique supérieur à celui préconisé lors de son installation peut ainsi être prévu pour que l'ensemble puisse traiter une éventuelle augmentation du débit des eaux grises.

Suivant des modes de mise en oeuvre préférés, l'invention répond en outre aux caractéristiques suivantes, mises en oeuvre séparément ou en chacune de leurs combinaisons techniquement opérantes.

Selon des modes de réalisation préférés, un dispositif de récupération comporte des moyens de connexion pilotés pour réaliser une connexion hydraulique temporaire entre la canalisation d'eau froide sanitaire et la première sortie de l'échangeur thermique à plaques, de sorte à créer un flux d'eau froide sanitaire, dit de nettoyage ou de purge, passant par l'échangeur thermique à plaques associé, entre la canalisation d'eau froide sanitaire et la canalisation de collecte.

Ainsi, en cas d'encrassement, ledit échangeur thermique à plaques est décolmaté à distance par une commande spécifique. En créant un flux d'eau sous pression dans le trajet normal d'écoulement des eaux grises mais en sens inverse, l'ensemble permet, selon ce mode de réalisation, non seulement de décolmater l'échangeur thermique à plaques par ce flux, mais aussi d'utiliser ce flux pour remplir ledit échangeur et chasser la bulle d'air emprisonnée au sommet de celui-ci. Ce mode de fonctionnement est dit de nettoyage.

Dans des exemples de réalisation préférés, les moyens de connexion pilotés comprennent une première vanne pilotée hydrauliquement entre la première sortie de l'échangeur thermique à plaques et la canalisation de collecte et une deuxième vanne pilotée hydrauliquement située sur un bras de dérivation entre la première entrée de l'échangeur thermique à plaques et la première sortie du module d'échange thermique.

Ces vannes sont positionnées et pilotées hydrauliquement de sorte à autoriser le passage intégral des eaux grises dans l'échangeur thermique à plaques pour ne pas générer de pertes de charge et permettre l'évacuation facile des matières polluantes lors du fonctionnement de l'ensemble dans le mode de nettoyage.

Avantageusement, les vannes pilotées placées sont des vannes à manchon pilotées par la pression du réseau d'eau froide sanitaire. Ainsi, l'ensemble objet de l'invention est mis en oeuvre sans autre forme d'énergie que la pression du réseau d'eau froide sanitaire. Ces vannes à manchon permettent en outre de conserver des sections de passage importantes compatibles avec l'évacuation des eaux grises.

De préférence, tous les dispositifs de récupération comportent des moyens de connexion pilotés.

Les matières polluantes solides, du fait qu'elles sont principalement agglomérées au niveau des premières entrées des échangeurs thermiques à plaques sont éliminées aisément lors du mode nettoyage.

Selon des modes de réalisation préférés, l'ensemble comporte un module de commande comportant un organe de pilotage apte à piloter, hydrauliquement ou électriquement, les moyens de connexion du dispositif de récupération.

Dans des formes de réalisation préférées, le module de commande et le module d'échange thermique comportent chacun respectivement deux sorties et deux entrées pour connecter hydrauliquement les moyens de connexion pilotés du dispositif de récupération contenu dans le module d'échange thermique et l'organe de pilotage du module de commande.

Lorsque deux dispositifs de récupération, de préférence tous les dispositifs de récupération, contenus dans deux modules d'échange thermique différents, respectivement dans tous les modules d'échange thermique, comportent des moyens de connexion pilotés, l'organe de pilotage du module de commande est apte à piloter simultanément ou non les moyens de connexion de chaque dispositif de récupération.

Ainsi, l'ensemble est commandé par la manoeuvre d'un organe de pilotage unique, distante des échangeurs thermiques à plaques des différents modules d'échanges thermiques.

Ce module de commande permet avantageusement l'ouverture, dans chaque module d'échange thermique, d'une évacuation directe entre la première entrée de l'échangeur thermique à plaques et la première sortie du module d'échange thermique lors du mode nettoyage, pour éviter de reporter les matières polluantes des échangeurs thermiques à plaques des modules d'échange thermique les plus en amont vers les échangeurs thermiques à plaques des modules d'échange thermique les suivant. Cela permet aussi, si nécessaire, de purger les modules d'échange thermique un par un, sans impacter les autres modules d'échange thermique.

Dans d'autres exemples de réalisation, le module de commande permet aussi de diriger le flux de purge dans chaque module d'échange thermique puis vers les premières entrées de ces derniers et permet ainsi avantageusement d'effectuer une opération de nettoyage de la canalisation située entre la première entrée de chaque module d'échange thermique et la première entrée de l'échangeur thermique à plaques associé ainsi que de la canalisation de distribution des eaux grises.

Le module de commande permet également avantageusement d'effectuer l'opération de nettoyage à contre-courant des échangeurs thermiques à plaques sans démontage des différents modules d'échange thermique et sans utiliser de déboucheur chimique.

Selon des modes de réalisation préférés, l'organe de pilotage est une vanne à 4 voies alimentée par le réseau d'eau froide sanitaire. Les moyens de connexion associés sont par exemple des vannes à manchon.

Selon des modes de réalisation préférés, le module de commande comporte une première sortie en connexion hydraulique avec la canalisation de collecte.

Ce module de commande est monté en dérivation à la canalisation de collecte, comme les modules d'échange thermiques.

Selon des modes de réalisation préférés, les modules d'échange thermique comportent des moyens d'assemblage complémentaires avec d'autres modules d'échange thermique.

Selon des modes de réalisation préférés, le module de commande comporte des moyens d'assemblage avec un module d'échange thermique.

### Présentation des figures

L'invention sera mieux comprise à la lecture de la description ci-après faite en référence aux dessins annexés :
La figure 1, déjà citée, représente selon une vue en perspective, un exemple de réalisation d'un dispositif de récupération fonctionnant en mode récupération de chaleur des eaux grises,
La figure 2, déjà citée, représente selon une vue en perspective, un exemple de réalisation d'un dispositif de récupération fonctionnant en mode nettoyage,
La figure 3 représente un exemple d'un ensemble d'échange thermique objet de l'invention comportant trois modules d'échange thermique,
La figure 4 représente un exemple d'un module d'échange thermique,
La figure 5 illustre la circulation du flux d'eaux grises dans l'ensemble d'échange thermique lorsqu'un débit seuil au niveau dudit premier module d'échange thermique n'est pas atteint,
La figure 6 illustre la circulation du flux d'eaux grises dans l'ensemble d'échange thermique, lorsqu'un débit seuil est atteint au niveau de chacun desdits deux premiers modules d'échange thermique,
La figure 7 illustre la circulation du flux d'eaux grises dans le trop plein, lorsqu'un débit seuil est atteint au niveau de chacun desdits modules d'échange thermique.

### Description détaillée d'un mode de réalisation de l'invention

Figure 3, selon un exemple de réalisation non limitatif de l'invention, un ensemble d'échange thermique 500 comporte trois modules d'échange thermique 600, un module de commande 700 et un réseau de canalisation hydraulique 800 reliant les différents modules d'échange thermique 600 entre eux et/ou avec le module de commande 700.

### Module d'échange thermique 600

Chaque module d'échange thermique comporte un dispositif de récupération de l'énergie thermique d'un écoulement des eaux grises d'un receveur et un réseau de canalisations hydrauliques.

Le dispositif de récupération comporte, de manière classique en soi, un échangeur thermique à plaques. L'échangeur thermique à plaques comporte une première entrée et une première sortie permettant le passage des eaux grises à travers celui-ci. Il comporte également une deuxième entrée et une deuxième sortie pour le passage d'eau froide sanitaire à la pression du réseau.

On se référera par exemple au dispositif de récupération de la demande de brevet FR 2 987 670 du demandeur, décrit ci-avant. Le dispositif de récupération comporte des moyens de connexion, par exemple deux vannes à manchon pilotées hydrauliquement, permettant de rediriger le flux d'eau froide sanitaire pour créer un flux de nettoyage.

Dans d'autres exemples de réalisation, les moyens de connexion sont des vannes pilotées électriquement.

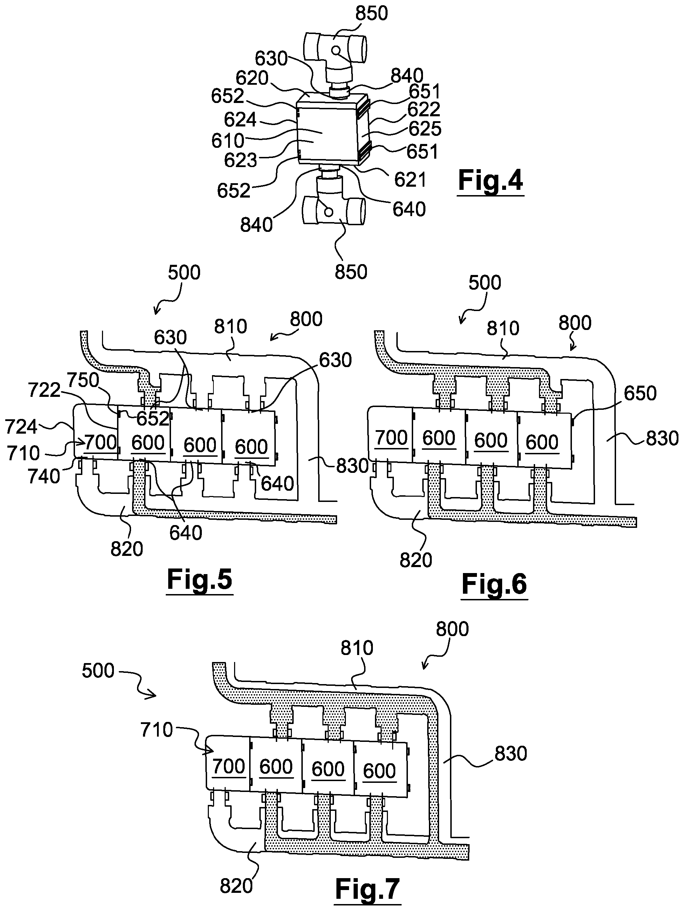

Le module d'échange thermique, figure 4, est formé d'un corps 610, de préférence fermé, définissant un volume interne pour la réception du dispositif de récupération. Le corps 610 présente par exemple une forme générale parallélépipédique comprenant une paroi supérieure 620 et une paroi inférieure 621, toutes deux bordées par quatre parois latérales 622-625.

Le module d'échange thermique 600 comporte :
- une première entrée 630 destinée à être placée en communication hydraulique, dans le volume du corps, avec la première entrée de l'échangeur thermique à plaques,
- une première sortie 640 destinée à être placée en communication hydraulique, dans le volume du corps, avec la première sortie de l'échangeur thermique à plaques,
- une deuxième entrée (non représentée) destinée à être placée en communication hydraulique, dans le volume du corps, avec la seconde entrée de l'échangeur thermique à plaques,
- une deuxième sortie (non représentée) destinée à placée en communication hydraulique, dans le volume du corps, avec la deuxième sortie de l'échangeur thermique à plaques.

Le module d'échange thermique comporte également des troisième et quatrième entrées (non représentées), chacune étant placée en communication hydraulique avec une vanne à manchon du dispositif de récupération.

Le module d'échange thermique comporte également, dans une paroi du corps, une cinquième entrée (non représentée) destinée au flux de nettoyage et placée en communication hydraulique avec la première sortie de l'échangeur.

Toutes les entrées et sorties précédentes sont de préférence ménagées dans la paroi supérieure 620 ou la paroi inférieure 621 du corps afin de faciliter le démontage de chacun des modules d'échange thermique et leur remplacement.

Le module d'échange thermique comporte en outre des moyens d'assemblage 650 avec d'autres modules d'échange thermique.

Les moyens d'assemblage 650 sont par exemple des moyens d'emboitement complémentaires sur deux parois latérales opposées 622, 624. Préférentiellement, ces deux parois latérales opposées 622, 624 ne comportent pas d'entrées et ou de sorties.

Comme illustré, par exemple sur la figure 4, une paroi latérale 622 comporte deux organes d'emboitement maie 651.

Selon l'exemple illustré, ladite paroi latérale comporte deux rails de guidage 651 qui s'étendent parallèlement à la paroi inférieure 621 sur toute une longueur de ladite paroi latérale.

La paroi latérale opposée 624 comporte deux organes d'emboitement femelle 652.

Selon l'exemple illustré, ladite paroi latérale 624 comporte deux rainures 652, chaque rainure présentant une forme complémentaire à la forme du rail de guidage 651 associé, et qui s'étendent parallèlement à la paroi inférieure 621 sur toute une longueur de ladite paroi latérale.

Les rails de guidage 651 et les rainures 652 sont, dans l'exemple illustré, parallèles entre eux.

Les rails de guidage 651, respectivement les rainures 652, sur une paroi latérale 622, respectivement 624, du corps 610 sont destinés à coopérer avec des rainures 652, respectivement des rails de guidage 651, complémentaires d'un autre module d'échange thermique. Lorsqu'ils coopèrent, les rails de guidage 651 et les rainures 652 complémentaires définissent une liaison glissière dont la direction de translation est parallèle aux parois latérales portant lesdits moyens d'emboitement et à la paroi inférieure 621 du corps 610.

Les rails de guidage 651 et les rainures 652 des corps 610 sont disposés de sorte que lorsque deux corps 610 sont assemblés, les parois inférieures 621, supérieures 620 et les parois latérales 622, 624, celles ne comportant les organes d'emboitement de chaque corps, affleurent.

Lors d'un démontage et d'un remplacement d'un module d'échange thermique, il suffit de faire coulisser ledit module d'échange thermique pour l'extraire aisément de l'ensemble.

### Réseau de canalisation hydraulique 800

Le réseau de canalisation hydraulique 800 comporte une canalisation de distribution des eaux grises 810, une canalisation de collecte 820 vers l'égout, une canalisation d'eau froide sanitaire (non représentée) à la pression du réseau.

Les modules d'échange thermique 600 sont en communication hydraulique les uns aux autres.

Chaque module d'échange thermique 600 est monté d'une part en dérivation avec la canalisation de distribution des eaux grises 810, au niveau de leur première entrée 630, par exemple via un raccord droit union trois pièces 840 et un raccord en Té 850, comme illustré figure 4.

Cette architecture de raccordements des modules d'échange thermique 600 à la canalisation de distribution des eaux grises 810 permet une distribution du flux des eaux grises en cascade, c'est-à-dire d'abord dans le module d'échange thermique 600 le plus en amont, puis une fois un débit seuil du flux des eaux grises atteint, dans les modules d'échange thermique 600 suivants, les uns après les autres.

Par souci de clarté, le module d'échange thermique 600 le plus en amont, également dénommé premier module d'échange thermique, est celui qui reçoit en premier le flux des eaux grises et est situé le plus à gauche sur la figure 3. Le module d'échange thermique 600 le plus en aval, également dénommé dernier module d'échange thermique, est celui qui reçoit en dernier le flux des eaux grises et est situé le plus à droite sur cette même figure 3.

Chaque raccordement entre la canalisation de distribution des eaux grises 810 et la première entrée 630 d'un module d'échange thermique présente une hauteur prédéfinie, nécessaire pour permettre l'utilisation des échangeurs thermiques à plaques en montage cascade.

La hauteur prédéfinie d'un raccordement correspond à une hauteur maximale de la colonne d'eau qui se forme dans ledit raccordement suivant le débit du flux des eaux grises dans l'échangeur thermique à plaques associé et l'état d'encrassement dudit échangeur thermique à plaques.

Ainsi, en fonction du type d'échangeur thermique à plaques, de la hauteur du raccordement et de l'état d'encrassement dudit échangeur thermique à plaques, le module d'échange thermique le contenant est défini par un débit seuil du flux des eaux grises à partir duquel les eaux grises débordent et sont reportées en aval dudit module d'échange thermique.

Dans un exemple non limitatif de l'invention, un module d'échange thermique comportant un échangeur thermique à plaques neuf acceptera un débit seuil de 30 L/min, tandis qu'un module d'échange thermique comportant un échangeur thermique à plaques encrassé n'acceptera qu'un débit seuil de 15 L/min. Un module d'échange thermique comportant un échangeur thermique à plaques totalement obturé aura un débit seuil nul.

Chaque module d'échange thermique 600 est monté d'autre part en série avec la canalisation d'eau froide sanitaire. En d'autres termes, l'eau froide sanitaire circule dans tous les modules d'échange thermique, les uns après les autres, du module d'échange thermique le plus en aval (le dernier module d'échange thermique) au module d'échange thermique le plus en amont (le premier module d'échange thermique).

La deuxième entrée du dernier module d'échange thermique est placée en communication hydraulique directe avec une entrée de la canalisation d'eau froide sanitaire.

La deuxième sortie de ce module d'échange thermique est placée en communication hydraulique avec la deuxième entrée du module d'échange thermique juxtaposé. Et ainsi de suite jusqu'au premier module d'échange thermique. La deuxième sortie de ce premier module d'échange thermique est placée en communication hydraulique directe avec la sortie de la canalisation d'eau froide, qui dirige l'eau froide réchauffée vers un récepteur. Le réseau de canalisation hydraulique 800 de l'ensemble d'échange thermique 500 comporte en outre un trop plein 830, sous la forme d'une canalisation reliée d'une part à la canalisation de distribution des eaux grises 810, en aval de la première entrée 630 du dernier module d'échange thermique 600, et d'autre part à la canalisation de collecte 820. Le trop plein 830 ne traverse aucun module d'échange thermique 600 et met la canalisation de distribution des eaux grises 810 en communication hydraulique directe avec la canalisation de collecte 820.

### Module de commande 700

Le module de commande 700 est formé d'un corps 710, de préférence fermé, définissant un volume interne pour un organe de pilotage qui est apte à piloter les différentes vannes à manchon de chaque dispositif de récupération.

Le corps 710 présente par exemple une forme générale parallélépipédique comprenant une paroi supérieure et une paroi inférieure, toutes deux bordées par quatre parois latérales 722, 724.

Préférentiellement, l'organe de commande est une vanne à 4 voies alimentée par le réseau d'eau froide sanitaire. Ainsi, l'ensemble d'échange thermique 500 est commandé par la manoeuvre d'une commande unique, distante des échangeurs thermiques à plaques des différents modules d'échanges thermiques 500.

Le module de commande 700 comporte :
- des première, deuxième et troisième sorties (non représentées) placées en communication hydraulique avec respectivement la troisième, la quatrième et la cinquième entrée de chaque module d'échange thermique 600,
- une entrée (non représentée) en communication hydraulique avec la canalisation d'eau froide sanitaire.
- une quatrième sortie 740 en communication hydraulique avec la canalisation de collecte 820, pour évacuer le surplus d'eau froide sanitaire servant à alimenter la vanne à 4 voies.

De préférence, le module de commande 700 est monté en dérivation, au niveau de la quatrième sortie 740, avec la canalisation de collecte 820.

Le module de commande comporte en outre des moyens d'assemblage 750 avec un module d'échange thermique. Le module de commande comporte des moyens d'assemblage 750 à ce module d'échange thermique.

Ces moyens d'assemblage 750 sont positionnés sur une face latérale 722 destinée à être en vis-à-vis d'une face latérale 624 du module d'extrémité équipé des moyens d'assemblage 650.

Ces moyens d'assemblage sont par exemple deux rails de guidage présentant une forme complémentaire aux rainures 652 du module d'échange thermique associé.

Lorsqu'ils coopèrent, les rails de guidage du module de contrôle et les rainures complémentaires 652 du module d'échange thermique définissent une liaison glissière dont la direction de translation est parallèle aux parois latérales et à la paroi inférieure du corps du module d'échange thermique.

### Mode récupération de chaleur (figures 5, 6 et 7)

Figure 5, les eaux grises, issues d'un receveur, tel que par exemple celui d'une douche, passent dans la canalisation de distribution des eaux grises 810, puis dans l'échangeur thermique à plaques du dispositif de récupération du premier module d'échange thermique 600, via sa première entrée 630, et ressortent, via la première sortie du premier module d'échange thermique 600, vers la canalisation de collecte 820. Simultanément, l'eau froide sanitaire circule dans tous les modules d'échange thermique et ressort de l'ensemble d'échange thermique réchauffé.

Lorsque le débit total du flux des eaux grises à traiter dépasse le débit seuil du premier module d'échange thermique 600, la colonne d'eau qui se forme dans le premier raccordement remonte jusqu'à la canalisation de distribution des eaux grises 810, à partir de quoi l'excédent du flux des eaux grises issu du premier module d'échange thermique s'écoule naturellement jusqu'à la première entrée suivante et s'introduit dans l'échangeur thermique à plaques du module d'échange thermique suivant, dit deuxième module d'échange thermique.

Figure 6, lorsque le débit de cet excédent du flux des eaux grises issu du premier module d'échange thermique 600 dépasse à son tour le débit seuil du deuxième module d'échange thermique 600, la colonne d'eau qui se forme dans le deuxième raccordement remonte également jusqu'à la canalisation de distribution des eaux grises 810, à partir de quoi l'excédent du flux des eaux grises issu du deuxième module d'échange thermique s'écoule naturellement jusqu'à la première entrée suivante et s'introduit dans l'échangeur thermique à plaques du module d'échange thermique suivant, dit troisième module d'échange thermique.

Figure 7, lorsque le débit du flux des eaux grises à traiter est supérieur à la somme des débits seuils de chaque module d'échange thermique 600, les colonnes d'eau qui se forme dans chacun des raccordements remontent dans la canalisation de distribution des eaux grises 810, à partir de quoi l'excédent du flux des eaux grises s'écoulent dans le trop plein 830 vers la canalisation de collecte 820.

Ainsi, on comprend aisément que, lorsque le débit seuil est atteint pour chacun des modules d'échange thermique, l'excédent du flux des eaux grises, initialement issues du receveur de la douche dans notre exemple, sont naturellement et directement évacuées vers la canalisation de collecte 820, de sorte que la douche reste utilisable.

### Modes de nettoyage

Dans un premier mode de nettoyage, Le réseau de canalisation hydraulique 800 tel que réalisé permet le débouchage des échangeurs thermiques à plaques en injectant simultanément, ou non, dans lesdits échangeurs thermiques à plaques de chaque module d'échange thermique de l'eau froide sanitaire en sens inverse, c'est-à-dire à contre-courant, de son fonctionnement nominal : l'eau froide sanitaire sous pression est injectée, via la cinquième entrée de chacun des modules d'échange thermique, à la première sortie des échangeurs thermiques à plaques respectifs et ressort par la première entrée des échangeurs thermiques à plaques. Elle s'écoule ensuite vers la canalisation de collecte 820, sans remonter par la canalisation de distribution des eaux grises 810. Le débouchage des échangeurs thermiques à plaques est alors simplifié.

Dans un deuxième mode de nettoyage, l'eau froide sanitaire sous pression qui ressort par la première entrée des échangeurs thermiques à plaques est redirigée vers la canalisation de distribution des eaux grises 810 et est évacuée vers la canalisation de collecte 820 par le trop plein 830. Ce deuxième mode de nettoyage permet d'évacuer d'éventuels débris accumulés dans les raccordements entre les modules d'échange thermique 600 et la canalisation de distribution des eaux grises 810.

Outre le dispositif de récupération de la demande de brevet FR 2 987 669 du demandeur, on peut également citer la demande de brevet internationale WO 2013/131930, toujours du demandeur. Dans ce document, le flux de nettoyage est utilisé pour fermer une vanne à manchon, en l'occurrence la vanne à manchon 142, via un dispositif générant des pertes de charge. Dans ce cas, le nombre d'entrées du module d'échange thermique se limite à quatre et non à cinq (l'entrée destinée à être placée en communication hydraulique avec la vanne à manchon 142 n'existe plus) et le nombre de sorties du module de commande se limite à deux et non à trois.

On peut également citer la demande de brevet FR 2 987 670, toujours du demandeur. Dans ce document, le dispositif de récupération ne comporte qu'une seule vanne à manchon. Dans ce cas, le nombre de sorties du module de commande est adapté au nombre de vannes à manchon du dispositif de récupération.

La description ci-avant illustre clairement que par ses différentes caractéristiques et leurs avantages, la présente invention atteint les objectifs fixés. En particulier, elle fournit un ensemble d'échange thermique permettant de récupérer l'énergie thermique des eaux grises et étant adapté à une utilisation dans des installations sanitaires collectives. L'ensemble d'échange thermique est modulaire, le nombre de modules d'échange thermique ainsi que le type de modules d'échange thermique sont choisis en fonction de l'installation collective sanitaire traitée ; il est donc possible de traiter une grande variété de cas à partir d'un nombre réduit de références de modules d'échange thermique.

## Revendications

1. Ensemble d'échange thermique (500) comportant :
- une canalisation de distribution des eaux grises (810),
- une canalisation de collecte (820), ledit ensemble d'échange thermique comportant un module d'échange thermique (600), ledit module d'échange thermique comportant :
• un dispositif de récupération d'énergie thermique de l'écoulement des eaux grises comportant un échangeur thermique à plaques,
• une première entrée (630) en connexion hydraulique avec la canalisation de distribution des eaux grises (810),
• une première sortie (640) en connexion hydraulique avec la canalisation de collecte (820),
• une deuxième entrée et une deuxième sortie en connexion hydraulique avec une canalisation d'eau froide sanitaire,
- un trop plein (830) reliant la canalisation de distribution des eaux grises (810) et la canalisation de collecte (820), en aval du module d'échange thermique (600),
**caractérisé en ce que**
l'ensemble d'échange thermique (500) comprend au moins un module d'échange thermique (600) additionnel identique au premier et connecté de manière identique,
lesdits modules d'échange thermique étant montés :
• en dérivation à la canalisation de distribution des eaux grises (810), au niveau de la première entrée (630),
• en dérivation à la canalisation de collecte (820), au niveau de la première sortie (640),
• en série à la canalisation d'eau froide sanitaire,
et **en ce que** le trop plein (830) est en aval des modules d'échange thermique (600).

2. Ensemble d'échange thermique (500) selon la revendication 1 dans lequel les modules d'échange thermique (600) comportent des moyens d'assemblage (650) avec d'autres modules d'échange thermique.

3. Ensemble d'échange thermique (500) selon l'une des revendications précédentes dans lequel un échangeur thermique à plaques comporte une première entrée et une première sortie pour permettre sa traversée par les eaux grises et dans lequel le dispositif de récupération associé comporte des moyens de connexion pilotés pour réaliser une connexion hydraulique temporaire entre la canalisation d'eau froide sanitaire et la première sortie de l'échangeur thermique à plaques de sorte à créer un flux d'eau froide sanitaire, dit de nettoyage, passant par le dit échangeur thermique à plaques, entre la canalisation d'eau froide sanitaire et la canalisation de collecte (820).

4. Ensemble d'échange thermique (500) selon la revendication 3 comportant un module de commande (700) comportant un organe de pilotage apte à piloter les moyens de connexion du dispositif de récupération.

5. Ensemble d'échange thermique (500) selon la revendication 4 dans lequel l'organe de pilotage est une vanne à 4 voies.

6. Ensemble d'échange thermique (500) selon l'une des revendications 4 ou 5 dans lequel le module de commande (700) comporte une troisième sortie (740) en connexion hydraulique avec la canalisation de collecte (820).

7. Ensemble d'échange thermique (500) selon l'une des revendications 4 à 6 dans lequel le module de commande (700) comporte des moyens d'assemblage (750) avec un module d'échange thermique (600).

## Patentansprüche

1. Wärmetauscheranordnung (500), welche aufweist:
- ein Verteilungsrohr für Grauwasser (810),
- ein Sammelrohr (820),
wobei die Wärmetauscheranordnung ein Wärmetauschermodul (600) aufweist, wobei das Wärmetauschermodul aufweist:
• eine Vorrichtung zur Rückgewinnung von Wärmeenergie aus der Strömung des Grauwassers, die einen Plattenwärmetauscher aufweist,
• einen ersten Einlass (630), der mit dem Verteilungsrohr für Grauwasser (810) in hydraulischer Verbindung steht,
• einen ersten Auslass (640), der mit dem Sammelrohr (820) in hydraulischer Verbindung steht,
• einen zweiten Einlass und einen zweiten Auslass, die mit einem Rohr für Brauchkaltwasser in hydraulischer Verbindung stehen,
- einen Überlauf (830), der das Verteilungsrohr für Grauwasser (810) und das Sammelrohr (820) stromabwärts des Wärmetauschermoduls (600) verbindet, **dadurch gekennzeichnet, dass**
die Wärmetauscheranordnung (500) wenigstens ein zusätzliches Wärmetauschermodul (600) umfasst, das mit dem ersten identisch ist und auf identische Weise angeschlossen ist,
wobei die Wärmetauschermodule angebracht sind:
• parallel zu dem Verteilungsrohr für Grauwasser (810) am ersten Einlass (630),
• parallel zu dem Sammelrohr (820) am ersten Auslass (640),
• in Reihe mit dem Rohr für Brauchkaltwasser,
und dadurch, dass sich der Überlauf (830) stromabwärts der Wärmetauschermodule (600) befindet.

2. Wärmetauscheranordnung (500) nach Anspruch 1, wobei die Wärmetauschermodule (600) Mittel zum Zusammenbau (650) mit anderen Wärmetauschermodulen aufweisen.

3. Wärmetauscheranordnung (500) nach einem der vorhergehenden Ansprüche, wobei ein Plattenwärmetauscher einen ersten Einlass und einen ersten Auslass aufweist, um seine Durchquerung durch das Grauwasser zu ermöglichen, und wobei die zugeordnete Rückgewinnungsvorrichtung vorgesteuerte Verbindungsmittel aufweist, um eine zeitweilige hydraulische Verbindung zwischen dem Rohr für Brauchkaltwasser und dem ersten Auslass des Plattenwärmetauschers herzustellen, um so einen Fluss von Brauchkaltwasser, Reinigungsfluss genannt, zu erzeugen, der den Plattenwärmetauscher zwischen dem Rohr für Brauchkaltwasser und dem Sammelrohr (820) durchströmt.

4. Wärmetauscheranordnung (500) nach Anspruch 3, welches ein Steuerungsmodul (700) aufweist, das ein Vorsteuerungsorgan aufweist, das in der Lage ist, die Verbindungsmittel der Rückgewinnungsvorrichtung vorzusteuern.

5. Wärmetauscheranordnung (500) nach Anspruch 4, wobei das Vorsteuerungsorgan ein 4-Wege-Ventil ist.

6. Wärmetauscheranordnung (500) nach einem der Ansprüche 4 oder 5, wobei das Steuerungsmodul (700) einen dritten Auslass (740) aufweist, der mit dem Sammelrohr (820) in hydraulischer Verbindung steht.

7. Wärmetauscheranordnung (500) nach einem der Ansprüche 4 bis 6, wobei das Steuerungsmodul (700) Mittel zum Zusammenbau (750) mit einem Wärmetauschermodul (600) aufweist.

## Claims

1. Heat exchange assembly (500) comprising:
- a grey water distribution duct (810),
- a collection duct (820), the said heat exchange assembly comprising a heat exchange module (600), the said heat exchange module comprising:
• a device for recovering heat energy from the grey water flow comprising a plate-type heat exchanger,
• a first inlet (630) in hydraulic connection with the grey water distribution duct (810),
• a first outlet (640) in hydraulic connection with the collection duct (820),
• a second inlet and a second outlet in hydraulic connection with a sanitary cold water duct,
- an overflow (830) connecting the grey water distribution duct (810) and the collection duct (820), downstream of the heat exchange module (600),
**characterized in that**
the heat exchange assembly (500) comprises at least one additional heat exchange module (600) identical to the first and connected in an identical manner, the said heat exchange modules being mounted:
• in bypass to the grey water distribution duct (810), at the level of the first inlet (630),
• in bypass to the collection duct (820), at the level of the first outlet (640),
• in series to the sanitary cold-water duct,
and **in that** the overflow (830) is downstream of the heat exchange modules (600).

2. Heat exchange assembly (500) according to Claim 1, in which the heat exchange modules (600) comprise means (650) for assembly with other heat exchange modules.

3. Heat exchange assembly (500) according to one of the preceding claims, in which a plate-type heat exchanger comprises a first inlet and a first outlet to allow the grey water to pass therethrough, and in which the associated recovery device comprises controlled connection means for producing a temporary hydraulic connection between the sanitary cold water duct and the first outlet of the plate-type heat exchanger so as to create a sanitary cold water flow, termed cleaning flow, passing through the said plate-type heat exchanger, between the sanitary cold water duct and the collection duct (820).

4. Heat exchange assembly (500) according to Claim 3, comprising a control module (700) comprising a control member able to control the connection means of the recovery device.

5. Heat exchange assembly (500) according to Claim 4, in which the control member is a 4-way valve.

6. Heat exchange assembly (500) according to either of Claims 4 and 5, in which the control module (700) comprises a third outlet (740) in hydraulic connection with the collection duct (820).

7. Heat exchange assembly (500) according to one of Claims 4 to 6, in which the control module (700) comprises means (750) for assembly with a heat exchange module (600).
